# EUROPEAN PATENT APPLICATION

(11) **EP 2 108 465 A1**
(43) Date of publication of application: **14.10.2009**
(21) Application number: 08251349.0
(22) Date of filing: 07.04.2008
(51) Int. Cl.: B21B 45/02, C21D 9/52, B21B 37/76

(54) **Method and apparatus for controlled cooling**

(71) Applicant: Siemens VAI Metals Technologies Ltd., Bournemouth International Airport Bournemouth Dorset BH23 6EW (GB)
(72) Inventor: The designation of the inventor has not yet been filed
(74) Representative: Maier, Daniel Oliver

(57) **Abstract**

The invention relates to a method and an apparatus for controlled cooling of hot rolled metal (1) using zone separation spray devices (10,11,12) which are adjustable as a function of the cooling flow (5,8) applied.

## Description

### FIELD OF INVENTION

The invention relates to the general field of controlled cooling of hot rolled metal and specifically to the accelerated cooling and direct quenching of steel strips and plates.

### BACKGROUND OF THE INVENTION

The controlled cooling of hot rolled steel is very important for achieving the desired microstructure and properties of the steel product. Modern plate and hot strip mills generally use powerful cooling systems for this purpose whereby the accurate control of the temperature and the cooling rate are very important. Water is usually used as the cooling fluid.

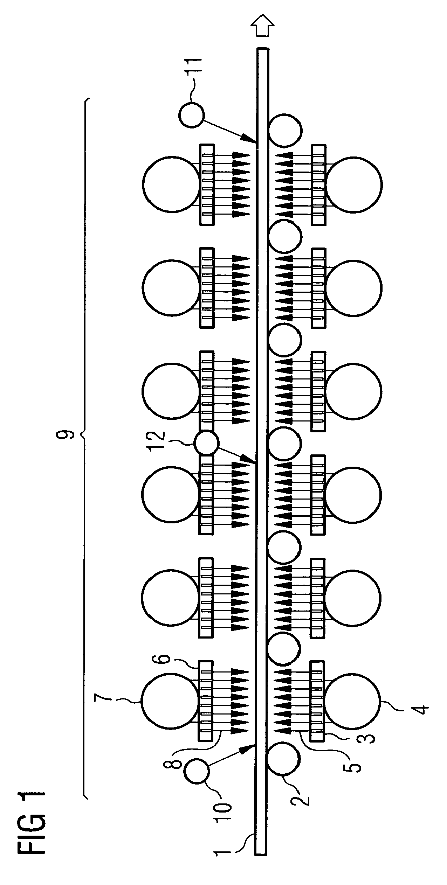

One of the most successful designs for an apparatus for controlled cooling is a design with a number of top cooling headers and bottom cooling headers, through which cooling water jets are being sprayed onto the top surface and the underside of the hot rolled metal plate or strip, as described for example in EP0178281.
A simplified cross-section of this type of apparatus is illustrated in Figure 1. A hot rolled metal plate or strip 1 which requires cooling is transported through the apparatus for controlled cooling on rollers 2. The apparatus for controlled cooling 9 consists of a number of top cooling headers 6 and a number of bottom cooling headers 3. For clarity Figure 1 shows only six top headers and six bottom headers but in practice a typical apparatus for controlled cooling has many more headers. The bottom cooling headers 3 spray cooling water jets 5 onto the underside of the plate and top cooling headers 6 spray cooling water jets 8 onto the top surface of the plate. The cooling water for the bottom cooling headers 3 is supplied through pipes 4 and the cooling water for the top cooling headers 6 is supplied through pipes 7.

In order to achieve good flatness of the cooled plates or strips it is very important that the top and bottom cooling are applied at the same time and that the top and bottom cooling are equal. If one surface is cooled before the other then the plate will tend to bow and to form either a gutter or inverted gutter shape or develop another type of flatness problem. In order to ensure that the cooling of the top surface starts and stops at the same time as the cooling of the bottom surface it is common practice to use fluid flows in the form of jets or streams, which are called zone separation sprays and are applied from zone separation spray devices. The zone separation sprays constrain the cooling water on the top surface of the plate or strip to a desired area, in the above example to the area between zone separation spray devices 10 and 11. The zone separation sprays are depicted by arrows starting from the zone separation spray devices. Without zone separation sprays the cooling water on the top surface of the plate or strip tends to flow both upstream and downstream, in relation to the direction of movement of the plate or strip, of the apparatus for controlled cooling and consequently the cooling of the top surface will start earlier and/or finish later compared to the bottom surface. The cooling water sprayed onto the bottom surface does not flow upstream or downstream partly because the water naturally falls away under gravity and partly because it is blocked by the rollers 2 on which the plate or strip is being transported. The direction of movement of the plate or strip is depicted by an arrow at the right end of the plate or strip 1.

Plates with differing thicknesses and different metallurgical requirements have different cooling requirements and sometimes cooling over the full length of the apparatus for controlled cooling 9 is not required. In this case it is common practice to switch off some of the top and bottom headers so that a shorter length of the apparatus is used for cooling. For example in the simplified system illustrated in Figure 1 it would be possible to use only the first three top and bottom headers instead of all the top and bottom headers. In this case in order to prevent the cooling water on the top surface of the plate from flowing downstream after the third header an additional zone separation spray device 12 is used to prevent the cooling water from flowing downstream of the third top header.

For clarity Figure 1 only shows three zone separation spray devices, one at each end of the apparatus for controlled cooling and one in the centre for dividing the length of the apparatus for controlled cooling 9 into two separate zones. In practice a typical apparatus for controlled cooling will have four or more zones and five or more zone separation spray devices.

The principle of operation of the zone separation sprays is that the zone separation spray devices 10, 11 and 12 are arranged such that the jets of the zone separation sprays are angled in towards the apparatus for controlled cooling 9 and that they have sufficient impact pressure to prevent the cooling water from passing through the zone separation sprays so that the cooling water is forced to travel to the edge of the plate instead of flowing upstream or downstream.
The impact pressure is the product of the mass flow (kilogram per second, kg/s) times the speed (metres per second, m/s) divided by the area of impact (square metre, m²).
The cooling flow of cooling water from the cooling headers on a modern apparatus for controlled cooling can be up to 33 liters per second per square metre or more at maximum flow. Consequently the zone separation sprays require a high mass flow and a high speed to achieve sufficient impact pressure to prevent that large amount of cooling water from passing through.

A zone separation spray device comprises one or multiple rows of nozzles. Multiple rows are often used so that the first row can stop most of the cooling water from passing through whilst subsequent rows stop any cooling water that gets through the first row.

A significant problem with a prior art apparatus for controlled cooling as illustrated in Figure 1 is that if the zone separation sprays have sufficient impact pressure to constrain the cooling water when the apparatus for controlled cooling is operating at maximum cooling flow from the cooling headers then the fluid flow out of the zone separation spray devices can significantly affect the cooling when the apparatus for controlled cooling is operating at lower cooling flows from the cooling headers. An apparatus for multipurpose interrupted cooling process (MULPIC) as described in EP 0 178 281 can achieve a 20:1 turndown ratio between maximum and minimum cooling flows from the cooling headers. In order to constrain the cooling water at maximum cooling flow the zone separation sprays are required to have large impact pressures and consequently large flows.

When cooling is done with maximum cooling flow from the cooling headers the flow out of the zone separation spray devices is only a small proportion of the total flow, typically less than 10%.
If when working at low cooling flows the same large impact pressure and large flow out of the zone separation sprays that are used during maximum cooling flow are employed, the flow out of the zone separation spray devices is a much higher proportion of the total flow, typically more than 50%.
The cooling flow is the sum of cooling water flows applied by all the top cooling headers 6 in operation. The flow out of the zone separation spray devices is the sum of fluid flows applied by all the zone separation spray devices in operation. The total flow is the sum of the cooling flow and the flow out of the zone separation spray devices. The flow out of the zone separation spray devices contributes to the cooling.

In the above example of a turndown ration between maximum and minimum cooling flow the proportion of the flow of the zone separation sprays will be twenty times higher at minimum cooling flow than at maximum cooling flow. By that large amount of fluid applied by the zone separation sprays in addition to the cooling flow the cooling process is affected negatively, since top and bottom cooling may become unequal due to large differences between the amounts of fluids which cool the top surface and the underside.

It will be apparent that whilst the description above refers to a MULPIC type cooling system the principle applies to any cooling system which utilizes zone separation sprays to constrain the cooling water on the top surface of the plate or strip being cooled.

### OBJECT OF THE INVENTION

It is the object of the present invention to provide a method and an apparatus for controlled cooling of hot rolled plate or strip shaped metals which diminishes affect of the cooling process by the contribution of the flow out of the zone separation spray devices to the total flow.

### DESCRIPTION OF THE INVENTION

This object is solved by the provision of a method for operating an apparatus for the controlled cooling of hot rolled plate or strip shaped metals by means of a cooling fluid comprising at least two zone separation spray devices, which is **characterized in that** during cooling the flow out of the zone separation spray devices is adjusted as a function of the cooling flow applied.

Cooling is done by application of a cooling fluid to the surfaces of the hot rolled plate or strip shaped metals. Preferably, the cooling fluid is water. The cooling flow is the sum of flows of cooling fluid applied to the top surface by means for cooling, for example top cooling headers as shown in Figure 1. It does not include the flow out of the zone separation spray devices.
The zone separation spray devices apply fluid flows in the form of jets or streams on the plate or strip shaped metal to constrain the cooling fluid on the top surface of the plate or strip to a desired area. These fluid flows are called zone separation sprays. The fluid is usually but not necessarily the same as the cooling fluid. The flow out of the zone separation spray devices is not part of the cooling flow.

By adjusting the flow out of the zone separation spray devices as a function of the cooling flow applied it can be ensured that the proportion of the flow out of the zone separation spray devices is a small proportion of the total flow at high cooling flow operation as well as at low cooling flow operation. The higher or lower the cooling flow, the higher or lower the flow out of the zone separation spray devices is adjusted, thereby always simultaneously ensuring that the impact pressure of the zone separation sprays is high enough to prevent cooling fluid from passing through and that its proportion of the total flow is small enough to not affect the cooling process significantly. The proportion of the total flow may be up to 20 %, preferably up to 10 %.

Each of the zone separation spray devices can either be adjusted independently from any other zone separation spray device or alternatively there can be a common system for adjusting several or all of the zone separation spray devices together.

The adjustment of the flow out of the zone separation spray devices can be done by any means for adjusting the flow of a fluid. Preferably, it is done by adjusting an adjustable valve and/or by changing the speed of a variable speed pump.

To accurately adjust the flow out of the zone separation spray devices it is monitored, preferably by measuring its pressure.

Furthermore, the object of the invention is solved by provision of an apparatus for the controlled cooling of hot rolled plate or strip shaped metals by means of a cooling fluid comprising at least two zone separation spray devices, **characterized in that** it comprises at least one device for controlling the flow out of the zone separation spray devices as a function of the cooling flow applied.

There can be one device for controlling the flow out of several or all the zone separation spray devices together. Alternatively for each one of the zone separation spray devices there can be one device for controlling the flow in another embodiment of the invention.

The device for controlling the flow out of the zone separation spray devices may comprise at least one adjustable valve, and/or at least one variable speed pump.

For controlling the flow out of the zone separation devices the device for controlling the flow out of the zone separation spray devices may comprise at least one pressure transducer for measuring the pressure of the flow and/or at least one flow meter for measuring the flow.

Schematic representations of the prior art and of exemplary embodiments of the invention are described in schematic Figures 1 to 4.
Figure 1 shows a simplified cross section of an apparatus for controlled cooling according to the state of the art.
Figure 2 shows a schematic illustration of a single nozzle of an embodiment of a zone separation spray device with an adjustable valve and a pressure transducer.
Figure 3 shows a schematic illustration of a single nozzle of an embodiment of a zone separation spray device with an adjustable valve.
Figure 4 shows a schematic illustration of a single nozzle of an embodiment of a zone separation spray device with a variable speed pump and a pressure transducer.

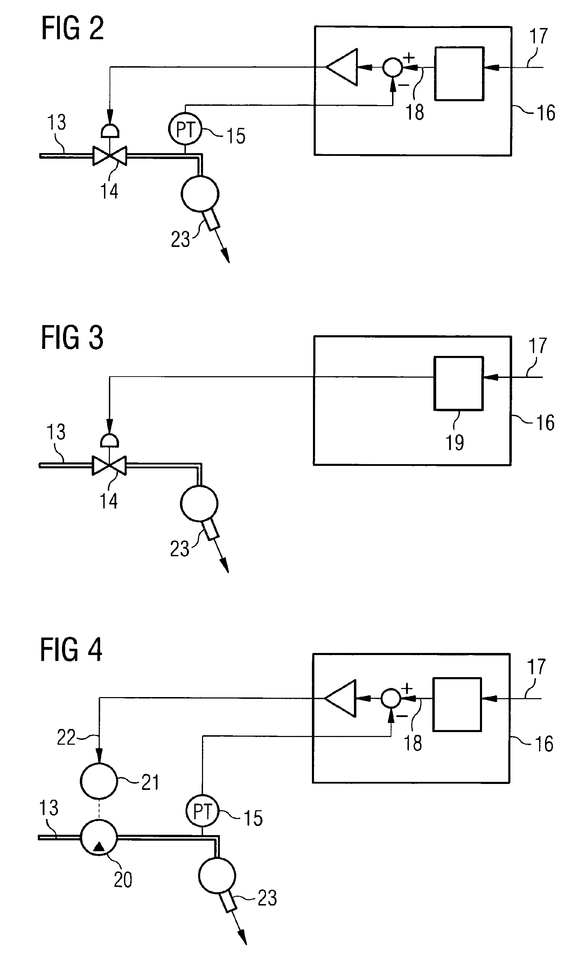

For simplicity Figure 2 shows only a single nozzle 10 of a zone separation spray device but it will be clear that the principle is intended to apply to all the nozzles of a zone separation spray device in an apparatus for controlled cooling. In Figure 2 an adjustable valve 14 is installed between the water supply line 13 and the zone separation spray nozzle 23. The water supply pressure is nominally constant although in practical systems there are small changes in this pressure due to the pump characteristic or the pressure relief valve characteristic. The pressure at the zone separation spray nozzle can be changed by opening or closing the adjustable valve 14. Closing the valve 14 creates a bigger pressure drop across the valve 14 and consequently the pressure in the zone separation spray nozzle is reduced and the flow out of the zone separation spray device comprising that nozzle 23 is reduced, because the flow out of the nozzle 23 is approximately proportional to the square root of the pressure. The flow out of the nozzle is depicted by an arrow.

In the exemplary embodiment illustrated in Figure 2 a pressure transducer 15 is used to monitor the pressure in the zone separation spray nozzle. The signal from the pressure transducer 15 goes into controller 16 where it is compared to a reference pressure signal 18. Any difference between these signals of measured pressure and reference pressure induces opening or closing of the valve 14 so as to reduce the difference. Hence the controller 16 is a device for controlling the flow out of zone separation spray devices. The reference pressure signal 18 is calculated based on the magnitude of the cooling flow 17 applied and the known pressure versus flow characteristic of the zone separation spray nozzles. By these means the flow out of zone separation spray devices is adjusted according to the cooling flow, i.e. as a function of the cooling flow, so that when the cooling flow is large the zone separation spray devices are operated at high mass flow, high speed, and high impact pressure, and when the cooling flow is lower the zone separation spray devices are operated at lower mass flow, lower speed, and lower impact pressure. The flow out of the zone separation spray devices for a given cooling flow is chosen so that it is just sufficient to constrain the cooling water within the relevant section of the apparatus for controlled cooling.

An alternative embodiment can use a flow-meter instead of the pressure transducer 15.

The pressure transducer 15 is not absolutely necessary and an alternative embodiment of the invention is illustrated in Figure 3. In this embodiment the signal inducing opening or closing of the valve 14 is generated within the controller 16 by a function 19 which is either a simple lookup table or a calculation based on the magnitude of the cooling flow 17. During the commissioning of the apparatus for controlled cooling the setting of valve 14 for a given cooling flow is adjusted manually so that it is just sufficient to constrain the cooling water and then the manual settings are stored in function 19 as either a lookup table or a simple formula.

Another alternative embodiment is illustrated in Figure 4. In this embodiment a pump 20 delivering water from a water supply line 13 to the zone separation spray device is driven by a variable speed motor and drive system 21. The signal from the pressure transducer 15 goes into controller 16 where it is compared to a reference pressure signal 18. Any difference between these signals of measured pressure and reference pressure induces changing the operational speed of motor and drive system 21 by a reference signal 22. The reference pressure signal 18 is calculated according to the magnitude of the cooling flow 17 so that the flow out of the zone separation spray device is just sufficient to constrain the cooling water.

### List of reference numbers:

- 1: plate or strip
- 2: roller
- 3: bottom cooling header
- 4: pipe
- 5: cooling water jet
- 6: top cooling header
- 7: pipe
- 8: cooling water jet
- 9: apparatus for controlled cooling
- 10: zone separation spray device
- 11: zone separation spray device
- 12: zone separation spray device
- 13: water supply line
- 14: valve
- 15: pressure transducer
- 16: controller
- 17: magnitude of the cooling flow
- 18: reference pressure signal
- 19: function
- 20: pump
- 21: motor and drive system
- 22: reference signal
- 23: nozzle

## Claims

1. Method for operating an apparatus for the controlled cooling of hot rolled plate or strip shaped metals by means of a cooling fluid comprising at least two zone separation spray devices, **characterized in that** during cooling the flow out of the zone separation spray devices is adjusted as a function of the cooling flow applied.

2. Method according to claim 1, **characterized in that** the flow out of the zone separation spray devices is adjusted by adjusting an adjustable valve.

3. Method according to claim 1 or 2, **characterized in that** the flow out of the zone separation spray devices is adjusted by changing the speed of a variable speed pump.

4. Method according to any one of the preceding claims, **characterized in that** the flow out of the zone separation spray devices is monitored by measuring its pressure.

5. Apparatus for the controlled cooling (9) of hot rolled plate or strip (1) shaped metals by means of a cooling fluid comprising at least two zone separation spray devices (10,11,12), **characterized in that** it comprises at least one device for controlling the flow out of the zone separation spray devices as a function of the cooling flow applied.

6. Apparatus according to claim 5, **characterized in that** the device for controlling the flow out of the zone separation spray devices comprises at least one adjustable valve (14).

7. Apparatus according to claim 5 or 6, **characterized in that** the device for controlling the flow out of the zone separation spray devices comprises at least one variable speed pump (20).

8. Apparatus according to any one of claims 5-7, **characterized in that** the device for controlling the flow out of the zone separation spray devices comprises at least one pressure transducer (15) for measuring the pressure of the flow out of the zone separation devices.

9. Apparatus according to any one of claims 5-8, **characterized in that** the device for controlling the flow out of the zone separation spray devices comprises at least one flow meter for measuring the flow out of the zone separation devices.
